# EUROPEAN PATENT APPLICATION

(11) **EP 2 930 916 A1**
(43) Date of publication of application: **14.10.2015**
(21) Application number: 13861401.1
(22) Date of filing: 25.11.2013
(51) Int. Cl.: H04M 1/725, G10L 17/14

(54) **METHOD FOR CONTROLLING BACKGROUND THROUGH VOICE AND MOBILE TERMINAL**

(30) Priority: 07.12.2012 CN 201210525821
(71) Applicant: Baidu Online Network Technology (Beijing) Co., Ltd, Beijing 100085 (CN)
(72) Inventor: SHEN, Ying, Beijing 100085 (CN); WANG, Linglong, Beijing 100085 (CN)
(74) Representative: Maiwald Patentanwalts GmbH
(86) International application number: PCT/CN2013/087799
(87) International publication number: WO 2014/086238

(57) **Abstract**

Proposed is a method for controlling a background through voice, comprising the following steps: saving a voiceprint feature of an owner of a mobile terminal in the mobile terminal, and establishing a voice bank, wherein the voice bank comprises a plurality of standard voice instructions, each standard voice instruction is used for controlling a corresponding background task, and the standard voice instruction has the voiceprint feature of the owner; monitoring a sound of the surrounding environment of the mobile terminal in real time; extracting a voiceprint feature of the monitored sound; judging whether a person making the monitored sound is the owner of the mobile terminal or not according to the extracted voiceprint feature and the voiceprint feature of the owner in the voice bank; if it is judged that the person making the sound is the owner of the mobile terminal, further judging whether the monitored sound contains the standard voice instructions in the voice bank or not; and if it is judged that the monitored sound contains the standard voice instructions, controlling corresponding background tasks according to the standard voice instructions. Also proposed is a mobile terminal. By means of the present invention, the operation of the background tasks can be controlled through voice.

## Description

### FIELD

The present invention relates to a technical field of mobile communication, and more particularly to a method for background control through voice and a mobile terminal.

### BACKGROUND

As the mobile terminals grow more intelligent, there are more tasks operating in the mobile terminals. If a user wants to execute a program in the mobile terminal, the program is mainly started through touch or click currently, and the foreground implements the corresponding function. However, when there are multiple tasks operating in the mobile terminal, the user needs to switch between different programs, which makes operation cumbersome. Worse still, it is not convenient to operate the mobile terminal if the hands of the user are both occupied.

### SUMMARY

The present invention seeks to solve at least one of the above problems to at least some extent.

Therefore, an objective of the present invention is to provide a method for controlling a background task through voice.

Another objective of the present invention is to provide a mobile terminal.

To achieve the objectives, a first aspect of embodiments of the present invention provides a method for background control through voice, comprising the following steps: saving a voiceprint feature of an owner of a mobile terminal in the mobile terminal, and establishing a voice base, in which the voice base comprises a plurality of standard voice instructions, each of the standard voice instructions is configured for controlling a corresponding background task, and the standard voice instruction has the voiceprint feature of the owner; monitoring a sound of a surrounding environment of the mobile terminal in real time; extracting a voiceprint feature of the sound; judging whether a person making the sound is the owner of the mobile terminal according to the voiceprint feature of the sound and the voiceprint feature of the owner in the voice base; if the person making the sound is the owner of the mobile terminal, further judging whether the sound contains the standard voice instructions in the voice base; and if the sound contains the standard voice instructions, controlling corresponding background tasks according to the standard voice instructions.

With the method for background control through voice according to the embodiments of the present invention, the operation of the background tasks is controlled through voice, and hence other tasks may be implemented without interrupting the current task run by the user. The user may enjoy high quality of experience of operating various tasks without switching among multiple programs. Moreover, the safety and reliability of voice control can be improved by identifying the voiceprint of the owner of the mobile terminal.

In one embodiment of the present invention, a voice sensor is used to monitor the sound of the surrounding environment of the mobile terminal.

In one embodiment of the present invention, each of the standard voice instructions comprises first semantic feature information that is configured for indicating a title and action of the corresponding background task.

In one embodiment of the present invention, judging whether the sound contains the standard voice instructions in the voice base comprises the following steps: analyzing the sound to obtain second semantic feature information; matching the second semantic feature information with the first semantic feature information; and searching for the standard voice instruction matched with the sound.

In one embodiment of the present invention, the method for background control through voice further comprises the following step: feeding back a result of performing the corresponding background task.

In one embodiment of the present invention, the result includes one or more selected from a group consisting of voice, text, vibration, image and ringing.

To achieve the objectives, a second aspect of embodiments of the present invention provides a mobile terminal, comprising: a storage module configured for storing a voiceprint feature of an owner of the mobile terminal, and storing a voice base, in which the voice base comprises a plurality of standard voice instructions, each of the standard voice instructions is configured for controlling a corresponding background task, and the standard voice instruction has the voiceprint feature of the owner; a monitoring module configured for monitoring a sound of a surrounding environment of the mobile terminal in real time; an extracting module configured for extracting a voiceprint feature of the sound; a judging module configured for judging whether a person making the sound is the owner of the mobile terminal according to the extracted voiceprint feature and the voiceprint feature of the owner, and further judging whether the sound contains the standard voice instructions if the person making the sound is the owner of the mobile terminal; and a background controlling module configured for controlling corresponding background tasks according to the standard voice instructions, if the judging module judges that the sound contains the standard voice instructions.

With the mobile terminal according to the embodiments of the present invention, the operation of the background tasks is controlled through voice, and hence other tasks may be implemented without interrupting the current task run by the user. The user may enjoy high quality of experience of operating various tasks without switching between different programs. Moreover, the safety and reliability of voice control can be improved by identifying the voiceprint of the owner of the mobile terminal.

In one embodiment of the present invention, the monitoring module is a voice sensor.

In one embodiment of the present invention, each of the standard voice instructions comprises first semantic feature information that is configured for indicating a title and an action of the corresponding background task.

In one embodiment of the present invention, the judging module comprises: a semantic analyzing unit configured for analyzing the sound to obtain second semantic feature information; a matching unit configured for matching the second semantic feature information with the first semantic feature information; and a searching unit configured for searching for the standard voice instruction matched with the sound.

In one embodiment of the present invention, the mobile terminal further comprises a feedback module configured for feeding back a result of performing the corresponding background task.

In one embodiment of the present invention, the result comprises one or more selected from a group consisting of voice, text, vibration, image and ringing.

Additional aspects and advantages of the present invention will be given in part in the following descriptions, become apparent in part from the following descriptions, or be learned from the practice of the embodiments of the present invention.

### BRIEF DESCRIPTION OF THE DRAWINGS

The above and/or additional aspects and advantages of the present invention will become apparent and more readily appreciated from the following descriptions made with reference to the drawings, in which:
Fig. 1 is a flow chart of a method for background control through voice according to one embodiment of the present invention;
Fig. 2 is a flow chart of a method for background control through voice according to another embodiment of the present invention;
Fig. 3 is a schematic view of a mobile terminal according to embodiments of the present invention;
Fig. 4 is a schematic view of a judging module according to embodiments of the present invention.

### DETAILED DESCRIPTION

Embodiments of the present invention will be described in detail and examples of the embodiments will be illustrated in the drawings, where same or similar reference numerals are used to indicate same or similar members or members with same or similar functions. The embodiments described herein with reference to drawings are explanatory, which are used to illustrate the present invention, but shall not be construed to limit the present invention.

In the description of the present invention, it shall be understood that terms such as "first" and "second" are used herein for purposes of description and are not intended to indicate or imply relative importance. In the description of the present invention, it shall be noted that the terms "connected" and "coupled" are used broadly, unless specified or limited otherwise, and for example, may be mechanical or electrical connections; may also be direct connections or indirect connections via intervening structures, which can be understood by those skilled in the art according to specific situations. Furthermore, in the description of the present invention, "a plurality of" means two or more than two, unless specified otherwise.

It can be understood that any process or method described in the flow charts or in other manners herein means comprising one or more modules, fragments or segments of codes capable of executing instructions of steps for fulfilling particular logical functions or process. Moreover, it shall be appreciated by those skilled in the art with reference to the following descriptions and drawings that the scope of the preferable embodiments of the present invention includes other realizations, and the functions can be implemented not necessarily in the sequence shown or discussed herein, instead, including the same or reverse sequence of the involved functions. In the descriptions and drawings, some specific embodiments of the present invention will be disclosed to explain some methods to carry out the principle of the embodiments of the present invention, but it shall be understood that the scope of the embodiments of the present invention is not limited thereby. On the contrary, the embodiments of the present invention belong to any change, modification and the like within spirit and content of the appended claims.

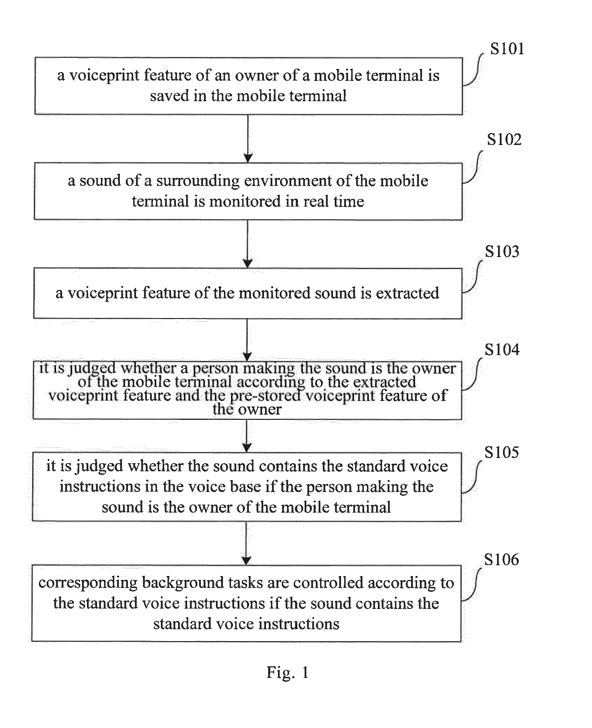

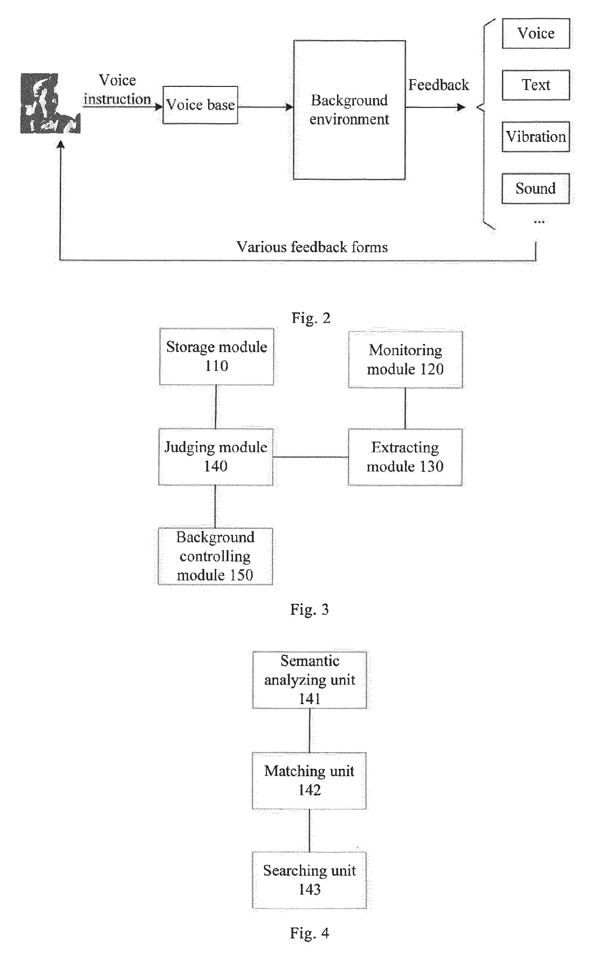

In the following, a method for background control through voice according to the embodiments of the present invention will be described with reference to Fig. 1 and Fig. 2.

As shown in Fig. 1, the method for background control through voice according to the embodiments of the present invention comprises the following steps.

At step S101, a voiceprint feature of an owner of a mobile terminal is saved in the mobile terminal, and a voice base is established.

In one embodiment of the present invention, the voice base comprises a plurality of standard voice instructions, each standard voice instruction is configured for controlling a corresponding background task, and the standard voice instruction has the voiceprint feature of the owner, in which each standard voice instruction contains first semantic feature information, and the semantic feature information is configured for indicating a title and an action of the corresponding background task.

At step S102, a sound of a surrounding environment of the mobile terminal is monitored in real time.

In one embodiment of the present invention, a voice sensor is used to monitor the sound of the surrounding environment of the mobile terminal.

At step S103, a voiceprint feature of the sound is extracted.

At step S104, it is judged whether a person making the sound is the owner of the mobile terminal according to the voiceprint feature of the sound and the voiceprint feature of the owner in the voice base.

At step S105, if the person making the sound is the owner of the mobile terminal, it is further judged whether the sound contains the standard voice instructions in the voice base.

First, the sound is analyzed to obtain second semantic feature information of the sound; then the second semantic feature information of the sound is matched with the first semantic feature information of the standard voice instructions; and the standard voice instruction matched with the sound is searched for.

At step S106, if the sound contains the standard voice instructions, the corresponding background tasks are controlled according to the standard voice instructions.

In one embodiment of the present invention, the method further comprises a step of feeding back a result of performing the corresponding background task, after the step S106, in which the result can comprise one or more selected from a group consisting of voice, text, vibration, image and ringing.

In the following, the process of the method for background control through voice according to the embodiments of the present invention will be described in detail with reference to Fig. 2.

The mobile terminal monitors the sound of the surrounding environment of the mobile terminal in real time, and extracts a voiceprint feature of the sound. When the owner of the mobile terminal sends a voice instruction (for example, "open the camera") to the mobile terminal, the mobile terminal monitors the sound and extracts the voiceprint feature of the sound. The mobile terminal compares the extracted voiceprint feature with the voiceprint feature of the owner in the voice base, and if the extracted voiceprint feature and the voiceprint feature of the owner are consistent, the mobile terminal determines that the person making the sound is the owner of the mobile terminal. Then, the mobile terminal further judges whether the sound contains the standard voice instructions in the voice base. If the voice instruction "open the camera" is found in the voice base, the voice instruction is outputted to the background environment, and the operation of the corresponding background task is controlled according to the voice instruction. The background feeds back the result of performing the task during or after the execution of the task. The result can be fed back in various forms, such as voice, text, vibration or sound. For instance, the display screen of the mobile terminal shows a prompt text that "the camera has been opened." Thus, the user can know that the camera has been opened, i.e. the background task has been executed.

With the method for background control through voice according to the embodiments of the present invention, the operation of the background tasks may be controlled through voice, and hence other tasks may be implemented without interrupting the current task run by the user. The user may enjoy high quality of experience of operating various tasks without switching between different programs. Moreover, the safety and reliability of voice control can be improved by identifying the voiceprint of the owner of the mobile terminal.

In the following, the mobile terminal according to the embodiments of the present invention will be described in detail with reference to Fig. 3 and Fig. 4.

As shown in Fig. 3, the mobile terminal according to the embodiments of the present invention comprises a storage module 110, a monitoring module 120, an extracting module 130, a judging module 140 and a background controlling module 150.

The storage module 110 is configured for storing a voiceprint feature of an owner of a mobile terminal and a voice base. The voice base includes a plurality of standard voice instructions, each of the standard voice instructions is configured for controlling a corresponding background task, and the standard voice instruction has the voiceprint feature of the owner. Each of the standard voice instructions contains first semantic feature information that is configured for indicating a title and an action of the corresponding background task.

The monitoring module 120 is configured for monitoring a sound of a surrounding environment of the mobile terminal in real time. In one embodiment of the present invention, the monitoring module 120 can be a voice sensor. The extracting module 130 is configured for extracting a voiceprint feature of the sound. The judging module 140 is configured for judging whether a person making the sound is the owner of the mobile terminal according to the extracted voiceprint feature and the voiceprint feature of the owner, and if the person making the sound is the owner of the mobile terminal, the judging module 140 is further configured for judging whether the sound contains the standard voice instructions.

As shown in Fig. 4, the judging module 140 comprises a semantic analyzing unit 141, a matching unit 142 and a searching unit 143. The semantic analyzing unit 141 is configured for analyzing the monitored sound to obtain second semantic feature information. The matching unit 142 is configured for matching the second semantic feature information with the first semantic feature information. The searching unit 143 is configured for searching for the standard voice instruction matched with the monitored sound.

The background controlling module 150 is configured for controlling corresponding background tasks according to the standard voice instructions, if the judging module 140 judges that the sound contains the standard voice instructions.

In one embodiment of the present invention, the mobile terminal according to the embodiments of the present invention further comprises a feedback module configured for feeding back a result of performing the corresponding background task to the user. The result comprises one or more selected from a group consisting of voice, text, vibration, image and ringing.

With the mobile terminal according to the embodiments of the present invention, the operation of the background tasks may be controlled through voice, and hence other tasks may be implemented without interrupting the current task run by the user. The user may enjoy high quality of experience of operating various tasks without switching between different programs. Moreover, the safety and reliability of voice control can be improved by identifying the voiceprint of the owner of the mobile terminal.

It can be understood that any process or method described in the flow charts or in other manners herein means comprising one or more modules, fragments or segments of codes capable of executing instructions of steps for fulfilling particular logical functions or process. Moreover, it shall be appreciated by those skilled in the art that the scope of the preferable embodiments of the present invention includes other realizations, and the functions can be implemented not necessarily in the sequence shown or discussed herein, instead, including the same or reverse sequence of the involved functions.

The logic and/or steps described in the flow charts or in other manners herein, for example, can be regarded as a sequencing list capable of executing instructions for implementing logical functions, and can be realized in any computer-readable storage medium to be used by instruction execution system, device, apparatus (based on systems of a computer, including the system of a processor or any other system capable of obtaining and executing instructions from the instruction execution system, device, apparatus), or the combination thereof. In terms of the present specification, "computer-readable storage medium" may be an apparatus capable of containing, storing, communicating, propagating or transmitting programs to be used by the instruction execution system, device, apparatus, or the combination thereof. Specific examples (a non-exhaustive list) of computer-readable storage media include: electrical connection pieces with one or more wirings (electronic devices), portable computer disks (magnetic devices), random-access memory (RAM), read-only memory (ROM), erasable programmable read-only memory (EPROM or flash memory), fiber devices and portable compact disc read-only memory (CDROM). In addition, computer-readable storage medium can even be paper or any other suitable medium on which the programs can be printed, because paper or other media can be, for example, optically scanned, edited, interpreted, or processed in other suitable ways when necessary, so as to obtain the programs in electronic format, and then store the programs in the computer memory.

It shall be understood that each part of the present invention can be realized by hardware, software, firmware or the combination thereof. In the above embodiments, the plurality of steps or methods can be implemented via software or firmware stored in the memory and executed by the suitable instruction execution system. For example, if the hardware is employed, like in another embodiment, the steps or methods can be implemented by any one of the following techniques commonly known in the art, or the combination thereof: a discrete logic circuit with a logic gate circuit for achieving logic functions of data signals, an application-specific integrated circuit having a suitable mixed logic gate circuit, a programmable gate array (GPA), a field-programmable gate array (FPGA) etc.

It can be appreciated by those skilled in the art that all of or part of the steps in the embodiments can be fulfilled via corresponding hardware instructed by the programs. The programs can be stored a computer-readable storage medium, and comprise one of the steps or the combination thereof when executed.

In addition, each function unit in each embodiment of the present invention can be integrated in one processing module, or can be discrete physical individuals. Also, two or more than two units are integrated in one processing module. The integrated module can be achieved either in the form of hardware, or in the form of software function module. The integrated module can be stored in a computer-readable storage medium, when it is achieved in the form of software function module, and sold or used as an individual product.

The memory media can be ROM, magnetic discs, optical discs, etc.

Reference throughout this specification to "one embodiment," "some embodiments," "examples," "specific examples," or "some examples," means that a particular feature, structure, material, or characteristic described in connection with the embodiment or example is included in at least one embodiment or example of the present invention. Thus, these terms throughout this specification do not necessarily refer to the same embodiment or example of the present disclosure. Furthermore, the particular features, structures, materials, or characteristics may be combined in any suitable manner in one or more embodiments or examples.

Although the embodiments of the present invention have been shown and described, it would be appreciated by those skilled in the art that the above embodiments are explanatory and cannot be construed to limit the present invention, and changes, modifications, alternatives and variations can be made in the embodiments without departing from spirit, principles and scope of the present invention.

## Claims

1. A method for background control through voice, comprising steps of:
saving a voiceprint feature of an owner of a mobile terminal in the mobile terminal, and establishing a voice base, wherein the voice base comprises a plurality of standard voice instructions, each standard voice instruction is configured for controlling a corresponding background task, and the standard voice instruction has the voiceprint feature of the owner;
monitoring a sound of a surrounding environment of the mobile terminal in real time;
extracting a voiceprint feature of the sound;
judging whether a person making the sound is the owner of the mobile terminal according to the voiceprint feature of the sound and the voiceprint feature of the owner in the voice base;
if the person making the sound is the owner of the mobile terminal, further judging whether the sound contains the standard voice instructions in the voice base; and
if the sound contains the standard voice instructions, controlling corresponding background tasks according to the standard voice instructions.

2. The method of claim 1, wherein a voice sensor is used to monitor the sound of the surrounding environment of the mobile terminal.

3. The method of claim 1, wherein each of the standard voice instructions comprises first semantic feature information, and the first semantic feature information is configured for indicating a title and an action of the corresponding background task.

4. The method of claim 3, wherein judging whether the sound contains the standard voice instructions comprises steps of:
analyzing the sound to obtain second semantic feature information;
matching the second semantic feature information with the first semantic feature information;
searching for the standard voice instruction matched with the sound.

5. The method of any one of claims 1 to 4, further comprising:
feeding back a result of performing the corresponding background task.

6. The method of claim 5, wherein the result comprises one or more selected from a group consisting of voice, text, vibration, image and ringing.

7. A mobile terminal, comprising:
a storage module, configured for storing a voiceprint feature of an owner of the mobile terminal, and storing a voice base, wherein the voice base comprises a plurality of standard voice instructions, each standard voice instruction is configured for controlling a corresponding background task, and the standard voice instruction has the voiceprint feature of the owner;
a monitoring module configured for monitoring a sound of a surrounding environment of the mobile terminal in real time;
an extracting module configured for extracting a voiceprint feature of the sound;
a judging module configured for judging whether a person making the sound is the owner of the mobile terminal according to the voiceprint feature of the sound and the voiceprint feature of the owner, and for further judging whether the sound contains the standard voice instructions if the person making the sound is the owner of the mobile terminal; and
a background controlling module configured for controlling corresponding background tasks according to the standard voice instructions, if the judging module judges that the sound contains the standard voice instructions.

8. The mobile terminal of claim 7, wherein the monitoring module is a voice sensor.

9. The mobile terminal of claim 7, wherein each of the standard voice instructions comprises first semantic feature information, and the first semantic feature information is configured for indicating a title and an action of the corresponding background task.

10. The mobile terminal of claim 9, wherein the judging module comprises:
a semantic analyzing unit configured for analyzing the sound to obtain second semantic feature information;
a matching unit configured for matching the second semantic feature information with the first semantic feature information; and
a searching unit configured for searching for the standard voice instruction matched with the sound.

11. The mobile terminal of any one of claims 7 to 10, further comprising a feedback module configured for feeding back a result of performing the corresponding background task.

12. The mobile terminal of claim 11, wherein the result comprises one or more selected from a group consisting of voice, text, vibration, image and ringing.
